# FASCICULE DE BREVET EUROPEEN

(11) **EP 3 058 315 B1**
(45) Date de publication et mention de la délivrance du brevet: **27.02.2019**
(21) Numéro de dépôt: 14790231.6
(22) Date de dépôt: 07.10.2014
(51) Int. Cl.: G01D 11/30, B60R 19/48

(54) **SYSTÈME DE FIXATION D'ORGANE FONCTIONNEL DE MESURE OU DE DÉTECTION, SUR UNE PIÈCE DE CARROSSERIE DE VÉHICULE**
SYSTEM ZUR BEFESTIGUNG EINER FUNKTIONSKOMPONENTE ZUR MESSUNG ODER DETEKTIERUNG AUF EINEM FAHRZEUGKAROSSERIETEIL
SYSTEM FOR FASTENING A FUNCTIONAL UNIT OF MEASURE OR DETECTION ON A COMPONENT OF A VEHICLE BODY

(30) Priorité: 15.10.2013 FR 1360000
(43) Date de publication de la demande: 24.08.2016
(73) Titulaire: Compagnie Plastic Omnium, 69007 Lyon (FR)
(72) Inventeur: JEANTON, Raphael, F-01640 Saint-Jean-le-Vieux (FR); BOURENNANE, Faicel, F-38390 Montalieu Vercieu (FR)
(74) Mandataire: Remy, Vincent Noel Paul
(86) Numéro de dépôt international: PCT/FR2014/052544
(87) Numéro de publication internationale: WO 2015/055918

(56) Documents cités:
- EP-A1- 1 048 524
- DE-A1- 19 939 747
- FR-A1- 2 715 458
- US-A1- 2010 127 697
- US-B1- 6 203 366
- US-B1- 6 279 210

## Description

L'invention concerne le domaine technique des pièces de carrosserie extérieure de véhicule comportant des organes fonctionnels, tels que des capteurs et des détecteurs. En particulier, l'invention concerne les systèmes de fixations de ces organes sur les pièces de carrosserie.

On connaît des systèmes de fixation de détecteurs sur des pièces de carrosserie, telles qu'un pare-chocs de véhicule automobile. Ces systèmes sont constitués d'une seule pièce : une pièce d'immobilisation du détecteur, rapporté sur le pare-chocs, généralement par soudage (ultra son). Le détecteur est généralement encliqueté dans cette pièce. Le montage des éléments (système de fixation et détecteur) se fait suivant l'axe principal du détecteur. D'autres systèmes sont connus mettant en oeuvre deux pièces intermédiaires : voir EP1048524 et US6203366.

Actuellement, les constructeurs automobiles intègrent de plus en plus d'organes fonctionnels aux pièces de carrosserie extérieure.

Chaque organe fonctionnel, capteurs de parking, capteur de système d'angle mort, détecteur de température..., a une forme différente. De plus, pour un même type d'organe, les formes du système de fixation sont différentes suivant le fabriquant de l'organe ou le véhicule. De ce fait, il est nécessaire que la pièce d'interface rapportée sur le pare-chocs soit réalisée pour un type d'organe bien précis.

De plus, les pare-chocs comportent plusieurs capteurs de parking. Du fait de la forme en galbe du pare-chocs, les pièces rapportées sur celui-ci doivent avoir des formes différentes en fonction de leur position sur le pare-chocs, pour suivre le galbe local. Il est en effet indispensable de suivre le galbe local, pour que le capteur soit parfaitement positionné et orienté précisément pour assurer sa fonction. Sinon, la mesure sera approximative ce qui n'est pas acceptable pour un tel capteur.

L'invention permet de s'affranchir de ces contraintes, en dissociant la fonction d'immobilisation de l'organe fonctionnel (encliquetage par exemple) de la fonction de fixation à la pièce de carrosserie.

L'objet de l'invention concerne ainsi un système de fixation (1) d'organe fonctionnel (2) de mesure ou de détection, sur une pièce de carrosserie (3) de véhicule, défini par la revendication 1 et permettant de s'affranchir de ces contraintes. Il comporte en particulier un support (4) comportant un moyen d'attache à l'organe fonctionnel (2), et une interface de fixation (5) du support (4) à la pièce de carrosserie, le support (4) et l'interface de fixation (5) étant assemblés l'un à l'autre au moyen d'un emboîtage par gorge.

Cette conception en deux pièces distinctes plutôt qu'une seule, est contraire aux habitudes des concepteurs. En effet, il est bien connu que la matière plastique permet de mouler des formes complexes ce qui permet de combiner des fonctionnalités sur une seule pièce. Le fait de n'utiliser qu'une seule pièce rend généralement le procédé plus simple et surtout il permet de réduire les coûts.

Mais ce système offre un avantage puisque le support (4) peut être standard pour un type d'organe fonctionnel (2), alors que seule l'interface de fixation (5) sera spécifique en fonction de sa position sur la pièce(2) de carrosserie galbée, qui elle, diffère selon le type de véhicule. De plus, ceci réduit les coûts d'outillage car seul l'outillage de l'interface de fixation (5) est à réaliser en fonction des formes de surface de liaison, qui épousent le galbe de la pièce (2).

Ce système offre un autre avantage puisque seul le support (4) peut être modifié si l'on souhaite par exemple changer d'organe fonctionnel (2) ou de fournisseur pour un même type d'organe fonctionnel.

Enfin, un dernier avantage concerne l'étape de mis au point du matériel. En effet, avant de passer en production, le système de fixation doit être testé pour vérifier qu'il respecte toutes les conditions de bon fonctionnement, notamment le positionnement exact des capteurs une fois montés sur la pièce de carrosserie, les efforts d'assemblage, la tenue à l'enfoncement. Le support (4) étant commun et donc une fourniture standard à tous les capteurs d'un certain type, indépendamment du véhicule, il suffit d'effectuer sa mise au point une seule fois, lors de la réalisation de l'outillage pour valider ses interfaces avec le capteur correspondant: lors de sa réutilisation sur un autre véhicule, le support étant déjà mis au point, il n'y a donc plus que l'interface de fixation (5) à mettre au point, qui elle est spécifique à chaque véhicule, du fait des galbes. D'un véhicule au suivant, le travail de mise au point des différents composants est donc réduit de moitié, puisque seule l'interface galbée de la semelle est à mettre au point vis-à-vis de la pièce de carrosserie.

Selon un mode de réalisation, le support (4) et l'interface de fixation (5) comportent des organes (8, 9) coopérant les uns avec les autres pour résister à des efforts d'enfoncement de préférence supérieurs à 10 daN, lesdits organes étant d'une part au moins deux ailettes d'emboîtement (8), et d'autre part des gorges (9) de formes correspondantes.

Selon l'invention les ailettes d'emboîtement (8) et les gorges (9) sont de formes circulaires. Les ailettes d'emboîtement (8) et les gorges (9) ont alors de préférences une course angulaire de montage comprise entre 45° et 10°, depréférence entre 25° et 15°.

Selon l'invention, les ailettes d'emboîtement (8) et les gorges (9) peuvent coulisser à jeu sensiblement négatif, ou de préférence à jeu sensiblement nul.

Selon un mode de réalisation, l'interface de fixation (5) comporte une semelle (10) équipée :
- d'un moyen de guidage (11) des ailettes d'emboîtement (8) dans les gorges (9) du support (4) vers une position finale de fonctionnement ;
- un moyen de verrouillage (12) du support (4) dans cette position.

Selon ce mode de réalisation, la semelle (10) peut comporter un orifice circulaire (13) portant sur sa circonférence :
- au moins deux gorges (9) en L et surplombant les ailettes d'emboîtement (8) dans la position, de façon à bloquer le mouvement d'arrachement des ailettes d'emboîtement (8) lorsqu'elles sont engagées dans les deux gorges (9) en L ;
- au moins une encoche (12) coopérant avec au moins une saillie (14) portée par la base du support (4), pour maintenir les ailettes d'emboîtement (8) dans ladite position ;
- au moins une butée (15) pour stopper le mouvement de rotation des ailettes d'emboîtement (8) dans ladite position, ladite butée (15) étant positionnée, de préférence entre deux gorges (9) successives.

Selon l'invention, l'organe fonctionnel (2) et le support (4) peuvent être assemblés l'un à l'autre au moyen d'un emboîtage par gorge.

Par exemple, le support (4) et l'organe fonctionnel (2) peuvent comporter des moyens coopérant les uns avec les autres pour résister à des efforts d'enfoncement de préférence supérieurs à 10 daN, lesdits organes étant d'une part au moins deux ailettes d'emboîtement, et d'autre part des gorges de forme correspondante.

Selon un mode de réalisation, les ailettes d'emboîtement et les gorges sont de formes circulaires.

L'invention concerne également une pièce de carrosserie extérieure (3) comprenant un système de fixation (1) d'organe fonctionnel (2) selon l'invention.

Selon l'invention, l'interface de fixation (5) peut être rapportée par soudage, collage, adhésivage, encliquetage, vissage ou rivetage. L'interface de fixation (5) peut également être moulée par injection avec la pièce de carrosserie extérieure (3).

L'invention concerne également un procédé d'assemblage d'organe fonctionnel sur une pièce de carrosserie extérieure de véhicule, au moyen d'un système de fixation selon l'invention, dans lequel on réalise les étapes suivantes :
a- On fixe l'interface de fixation sur la pièce de carrosserie ;
b- On immobilise l'organe fonctionnel dans le support ; et
c- On emboîte et verrouille le support dans l'interface de fixation.

Enfin, selon l'invention, on peut surmouler l'interface de fixation avec la pièce de carrosserie.

L'invention sera mieux comprise à la lecture de la description qui va suivre, en se référant aux dessins annexés dans lesquels :
- La figure 1 illustre un système de fixation (1) d'organe fonctionnel selon l'invention.
- La figure 2 illustre un support (4) du système de fixation (1) selon l'invention.
- La figure 3 illustre une interface de fixation (5) du système de fixation (1) selon l'invention.
- La figure 4 illustre système de fixation (1) en place sur une pièce de carrosserie (3) avec l'organe fonctionnel (2).

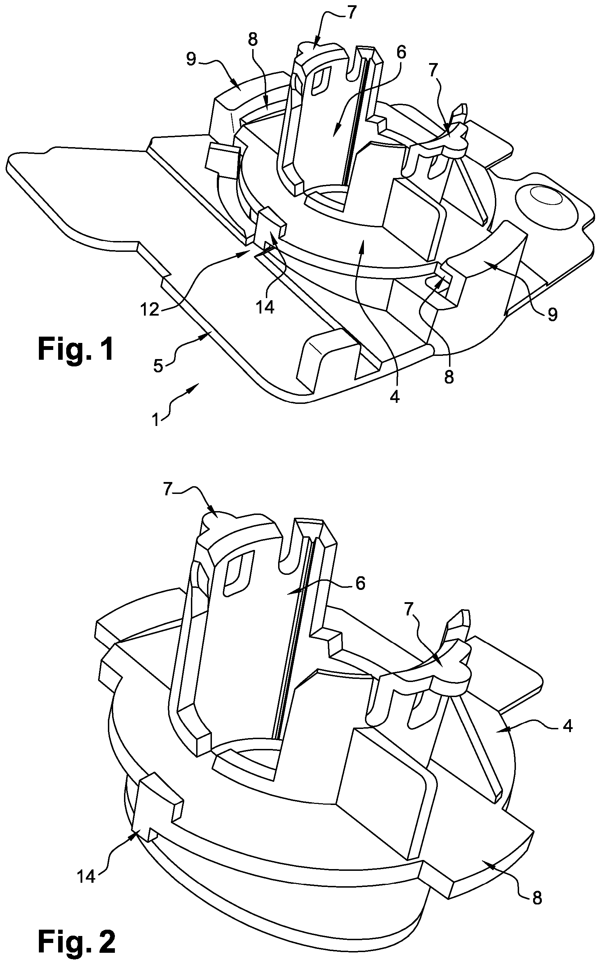

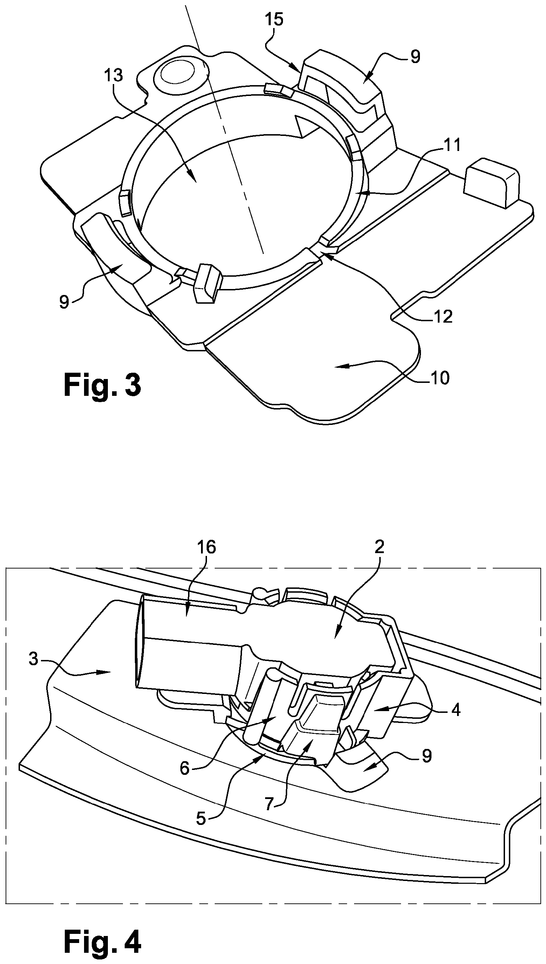

On se réfère maintenant aux figures 1 et 4 qui illustrent un mode de réalisation, selon l'invention, d'un système de fixation (1) d'organe fonctionnel (2) de mesure ou de détection, sur une pièce de carrosserie (3) de véhicule.

Les organes fonctionnels (2) peuvent être des capteurs de parking, des capteurs de système d'angle mort, des capteurs de mesure de place disponible, des détecteurs de température,...

La pièce de carrosserie (3) peut être une aile, le toit, un ouvrant (porte ou hayon), ou tout élément constituant du pare-chocs (la peau, la grille d'entrée d'air, un enjoliveur...).

Dans la suite de la description, on décrit un mode de réalisation dans lequel l'organe fonctionnel est un capteur de parking, et la pièce de carrosserie est la peau du pare-chocs d'un véhicule.

Ce système de fixation (1) d'organe fonctionnel (2) comporte un support(4) muni d'un moyen d'attache à l'organe fonctionnel (2), et une interface de fixation (5)de ce support (4) sur la pièce de carrosserie (3). Le support (4) et l'interface de fixation (5) sont assemblés et verrouillés l'un à l'autre au moyen d'un emboîtage par gorge.

De façon préférentielle, pour minimiser la masse du véhicule, le support (4) et l'interface de fixation (5) sont en matière plastique, et de préférence en matière thermoplastique. Le support (4) et l'interface de fixation (5) peuvent être constitués de matières différentes.

En se référant à la figure 2, le support(4) peut comporter un logement (6) apte à recevoir l'organe fonctionnel (2) à l'intérieur et un moyen d'immobilisation(7) de l'organe fonctionnel (2) dans le logement (6). Le moyen d'immobilisation (7) peut être :
- un système d'encliquetage de l'organe dans le support comme représenté sur les figures 1, 2 et 4. Sur cette figure, le système d'encliquetage comporte deux ailettes (7)d'encliquetage (clips) orientées selon l'axe de la cheminée ; il est de préférence adapté à fournir une force inférieure à 5daN, de préférence inférieure à 3 daN, et idéalement inférieure à 1 daN pour l'encliquetage de l'organe fonctionnel dans le support ;
- un système à gorge circulaire ; il est de préférence adapté à fournir une force inférieure à 5daN, de préférence inférieure à 3 daN, et idéalement inférieure à 1 daN(force d'appui sur un organe pour le mettre en rotation) pour la rotation de l'organe fonctionnel dans le support ; ou
- une vis.

Dans le cas d'un système à gorge circulaire, la notion de force exercée est précisée ci-après. Selon l'ergonomie de montage et la gestuelle de l'opérateur (nombre (N) de doigts utilisés pour appliquer le couple nécessaire au montage en rotation), il en résulte un effort équivalent appliqué sur N zones d'appuis du capteur et/ou du support, et donc l'effort équivalent sur chaque doigt de l'opérateur.

Si on prend l'hypothèse basse (cas où le doigt de l'opérateur ne doit pas subir en effort axial local plus de 1daN), et que les zones d'appui sont à environ 2cm de l'axe de rotation, alors le couple appliqué pour une gestuelle à deux doigts (pouce + index en opposition sur deux appuis diamétralement opposés) est :(2x1daN)*2cm=0.4N.m

Si l'effort acceptable est de 3daN mais avec un effort réparti sur trois appuis à 120° à 1.5cm de l'axe de rotation, alors le couple appliqué est : (3x3daN)*1.5cm=1.35N.m

Si on prend l'hypothèse haute mais toujours à deux doigts appuyant 5daN à 2cm de l'axe, alors le couple appliqué est 2N.m

Plus les efforts appliqués sont élevés plus les risques sont grands pour l'opérateur (TMS, pénibilité...), mais plus cela permet d'effectuer un assemblage « serré » dans la gorge, soit par un jeu sensiblement nul, soit par un jeu sensiblement négatif.

L'Homme du Métier saura optimiser la conception en fonction, des efforts maximum acceptables pour l'opérateur (législation selon les pays, règles internes des entreprises, cahiers des charges...), du nombre d'appuis (doigts utilisés dans la gestuelle), de la distance des appuis à l'axe de rotation...

En se référant aussi à la figure 3, le support (4) et l'interface de fixation (5) comportent des organes (8, 9) de formes complémentaires (du type mâle/femelle) et coopérant les uns avec les autres pour éviter que le support (4), immobilisant le capteur (2), se désolidarise de l'interface de fixation (5) lorsqu'il subit un effort axial, notamment de l'extérieur vers l'intérieur du véhicule (effort d'enfoncement).

Ces organes (8, 9) coopérant les uns avec les autres pour résister à des efforts d'enfoncement sont d'une part au moins deux ailettes d'emboîtement (8), et d'autre part au moins deux gorges (9) de formes correspondantes, les ailettes d'emboîtement(8) s'engageant dans les gorges (9).

Selon l'invention, les ailettes d'emboîtement (8) et les gorges (9) sont de forme circulaire (figures 1 à 4). L'engagement se fait alors par un mouvement de rotation. Les ailettes d'emboîtement (8) ont une course angulaire (débattement) de montage dans les gorges (9) comprise entre 45° et 10°, de préférenceentre 25° et 15°.

Pour que les ailettes d'emboîtement(8) et les gorges (9) restent bien engagées les unes dans les autres, de façon à éviter un jeu résiduel en position montée causant des vibrations, ou une qualité perçue médiocre, ou une mauvaise précision de la position de l'organe fonctionnel...), elles peuvent coulisser à jeu sensiblement nul. Les ailettes d'emboîtement (8) et les gorges (9) présentent alors, et de préférence, au moins un chanfrein (non représenté) d'entrée. Le chanfrein peut être sur la gorge (9) ou sur l'ailette d'emboîtement (8).

Les ailettes d'emboîtement (8) peuvent être portées par le support (4) et les gorges (9) sur l'interface de fixation (5), ou inversement.

Ainsi, selon **un mode de réalisation** (figures 2 et 3), le support (4) comporte sur sa face extérieure au moins deux ailettes d'emboîtement (8). Ces ailettes d'emboîtement(8) coopèrent, en s'y engageant, avec des gorges (9) de formes correspondantes situées sur l'interface de fixation (5).

Selon un exemple de ce mode de réalisation (figures 2 et 3), l'interface de fixation (5) comporte une semelle (10) équipée :
- d'un moyen de guidage (11), vers une position finale de fonctionnement, des ailettes d'emboîtement(8) dans les gorges (9) du support (4); selon un mode de réalisation, ce moyen de guidage (11) est une gorge dont une partie forme la gorge d'emboîtement (9) ;
- un moyen de verrouillage (12) du support (4) dans cette position.

La semelle (10) peut par exemple comporter un orifice circulaire (13) portant sur sa circonférence :
- au moins deux gorges (9) en L et surplombant les ailettes d'emboîtement(8) dans la position, de façon à bloquer le mouvement d'arrachement des ailettes d'emboîtement(8) lorsqu'elles sont engagées dans les deux gorges (9) en L ; Les deux gorges étant de préférence diamétralement opposées ;
- au moins une encoche (12) coopérant avec au moins une saillie (14) portée par la base du support (4), pour maintenir verrouiller les ailettes en position d'engagement (8) dans ladite position; ladite encoche (12) étant positionnée à égale distance des deux gorges (9) en L ;
- au moins une butée (15) pour stopper le mouvement de rotation des ailettes d'emboîtement (8) dans ladite position, ladite butée (15) étant positionnée, de préférence entre deux gorges (9) successives.

Selon **un autre mode de réalisation** (non représenté), les ailettes d'emboîtement (8) sont sur l'interface de fixation (5) et les gorges (9) sont sur le support (4).

Selon encore un **autre mode de réalisation** (non représenté), l'organe fonctionnel (2) et le support (4) sont assemblés selon le même système d'assemblage qu'entre le support (4) et l'interface de fixation (5).

Ce mode de réalisation permet de s'affranchir d'un problème d'efforts antagonistes subis par les pièces, et décrits ci-après.
- D'une part, l'effort d'assemblage du capteur (2) sur le système de fixation (1) doit être inférieur à 1 daN, pour éviter de générer des TMS (troubles musculo squelettiques) chez les opérateurs chargés de cette opération de montage.
- D'autre part, le système de fixation (1) doit supporter des efforts d'enfoncements d'environ 10 daN. Le but étant que le capteur (2) ne se désolidarise pas du système de fixation (1).Ces efforts d'enfoncement correspondent à une force exercée, directement ou indirectement, sur le support (4), l'interface de fixation (5) ou le capteur (2) du pare-chocs (3) depuis l'extérieur, et selon l'axe du système de fixation (1).

Ainsi, le sens et la valeur des deux efforts, effort d'assemblage et effort d'enfoncement, sont antagonistes.

Selon ce mode de réalisation, qui permet de s'affranchir de ces contraintes, le moyen d'attache de l'organe fonctionnel (2) est un système à gorge : le support (4) et l'organe fonctionnel (2) comportent des moyens coopérant les uns avec les autres pour résister à des efforts d'enfoncement de préférence supérieurs à 10 daN. Ces moyens peuvent être d'une part au moins deux ailettes d'emboîtement, et d'autre part des gorges de forme correspondante. Ces ailettes d'emboîtement et les gorges peuvent être rectilignes ou de formes circulaires. Les ailettes d'emboîtement et les gorges coulissent de préférence à jeu sensiblement nul. Dans le cas circulaire, la force d'assemblage est dans ce cas une force d'appui sur une surface permettant la rotation de l'organe fonctionnel dans le support (4).

Grâce à ce système, il est possible de configurer les pièces de façon à respecter simultanément les contraintes minimale d'enfoncement et maximale d'assemblage.

Bien entendu, avec un tel système d'immobilisation, il est préférable que le support (4) et l'interface de fixation (5) comportent des organes (8, 9) de formes complémentaires (du type mâle/femelle) et coopérant les uns avec les autres pour résister à des efforts d'enfoncement de préférence supérieurs à 10 daN (figures 2 et 3). Ainsi, c'est l'ensemble du système qui résiste à des efforts d'enfoncement de préférence supérieurs à 10 daN, tout en étant adapté à fournir une force d'assemblage inférieure à 1 daN.

**L'invention concerne également une pièce de carrosserie extérieure**(3) comprenant un système de fixation (1) d'organe fonctionnel (2) selon l'invention.

Sur cette pièce de carrosserie (3), l'interface de fixation (5) est rapportée par soudage, collage, adhésivage, encliquetage, vissage ou rivetage. L'interface de fixation (5) peut également être moulée par injection avec la pièce de carrosserie extérieure (3), comme illustré sur la figure 4.

**L'invention concerne également un procédé d'assemblage** d'organe fonctionnel sur une pièce de carrosserie extérieure de véhicule, au moyen d'un système de fixation selon l'invention.

Le procédé comporte les étapes suivantes, dont l'ordre d'exécution est indifférent :
a- On fixe l'interface de fixation sur la pièce de carrosserie ;
b- On immobilise l'organe fonctionnel dans le support ; et
c- On emboîte et verrouille le support dans l'interface de fixation.

L'ordre préférentiel est a, puis b, puis c. En effet, ce mode de réalisation comporte plusieurs avantages :
- l'interface de fixation peut être surmoulée à la pièce de carrosserie (Figure 4) ;
- l'embase de connectique (16) de l'organe fonctionnel, reliée au faisceau électrique, fournit à l'opérateur un bras de levier, ou une surface d'appui, pour immobiliser l'organe fonctionnel dans le support, et/ou pour emboîter et verrouiller le support dans l'interface de fixation.

## Revendications

1. Système de fixation (1) d'organe fonctionnel (2) de mesure ou de détection, sur une pièce de carrosserie (3) de véhicule, **caractérisé en ce qu'**il comporte un support (4) comportant un moyen d'attache (6, 7) à l'organe fonctionnel (2), et une interface de fixation (5) dudit support (4) à la pièce de carrosserie (3), ledit support (4) et ladite interface de fixation (5) étant assemblés l'un à l'autre au moyen d'un emboîtage par gorge de forme circulaire, le support (4) et l'interface de fixation (5) comportant des organes (8, 9) coopérant les uns avec les autres, lesdits organes étant d'une part au moins deux ailettes d'emboîtement (8), et d'autre part des gorges (9) de formes correspondantes, les ailettes d'emboîtement (8) s'engageant dans les gorges (9) par un mouvement de rotation.

2. Système selon la revendication 1, dans lequel les organes (8, 9) coopérant les uns avec les autres pour résister à des efforts d'enfoncement de préférence supérieurs à 10 daN.

3. Système selon la revendication 2, dans lequel les ailettes d'emboîtement (8) et les gorges (9) ont une course angulaire de montage comprise entre 45° et 10°, de préférence entre 25° et 15°.

4. Système selon l'une des revendications 2 et 3, dans lequel les ailettes d'emboîtement (8) et les gorges (9) coulissent à jeu sensiblement négatif, ou de préférence à jeu sensiblement nul.

5. Système selon l'une des revendications 2 à 4, dans lequel l'interface de fixation (5) comporte une semelle (10) équipée :
- d'un moyen de guidage (11) des ailettes d'emboîtement (8) dans les gorges (9) du support (4) vers une position finale de fonctionnement ;
- un moyen de verrouillage (12) du support (4) dans cette position.

6. Système selon la revendication 5, dans lequel la semelle (10) comporte un orifice circulaire (13) portant sur sa circonférence :
- au moins deux gorges (9) en L et surplombant les ailettes d'emboîtement (8) dans la position, de façon à bloquer le mouvement d'arrachement des ailettes d'emboîtement (8) lorsqu'elles sont engagées dans les deux gorges (9) en L ;
- au moins une encoche (12) coopérant avec au moins une saillie (14) portée par la base du support (4), pour maintenir les ailettes d'emboîtement (8) dans ladite position ;
- au moins une butée (15) pour stopper le mouvement de rotation des ailettes d'emboîtement (8) dans ladite position, ladite butée (15) étant positionnée, de préférence entre deux gorges (9) successives.

7. Système selon l'une des revendications précédentes, dans lequel l'organe fonctionnel (2) et le support (4) sont assemblés l'un à l'autre au moyen d'un emboîtage par gorge.

8. Système selon la revendication 7, dans lequel le support (4) et l'organe fonctionnel (2) comportent des moyens coopérant les uns avec les autres pour résister à des efforts d'enfoncement de préférence supérieurs à 10 daN, lesdits moyens étant d'une part au moins deux ailettes d'emboîtement, et d'autre part des gorges de forme correspondante.

9. Système selon la revendication 8, dans lequel les ailettes d'emboîtement et les gorges sont de formes circulaires.

10. Pièce de carrosserie extérieure (3) comprenant un système de fixation (1) d'organe fonctionnel (2) selon l'une des revendications précédentes.

11. Pièce selon la revendication 10, dans lequel l'interface de fixation (5) est rapportée par soudage, collage, adhésivage, encliquetage, vissage ou rivetage.

12. Pièce selon la revendication 10, dans lequel l'interface de fixation (5) est moulée par injection avec la pièce de carrosserie extérieure (3).

13. Procédé d'assemblage d'organe fonctionnel sur une pièce de carrosserie extérieure de véhicule, au moyen d'un système de fixation selon l'une des revendications 1 à 9, dans lequel on réalise les étapes suivantes :
a- On fixe l'interface de fixation sur la pièce de carrosserie ;
b- On immobilise l'organe fonctionnel dans le support ; et
c- On emboîte et verrouille le support dans l'interface de fixation.

14. Procédé selon la revendication 13, dans lequel on surmoule l'interface de fixation avec la pièce de carrosserie.

## Patentansprüche

1. System zur Befestigung (1) eines Funktionselements (2) zum Messen oder zum Detektieren an einem Karosserieteil (3) eines Fahrzeugs, **dadurch gekennzeichnet**, es einen Träger (4) mit einem Mittel zum Verbinden (6, 7) an dem Funktionselement (2) und eine Schnittstelle zum Befestigen (5) des Trägers (4) an dem Karosserieteil (3) aufweist, wobei der Träger (4) und die Befestigungsschnittstelle (5) mit Hilfe einer Kreisnut-Steckverbindung aneinander montiert sind, wobei der Träger (4) und die Befestigungsschnittstelle (5) Elemente (8, 9) aufweisen, die miteinander zusammenwirken, wobei die Elemente einerseits wenigstens zwei Einsteckrippen (8) und andererseits Nuten (9) korrespondierender Form sind, wobei die Einsteckrippen (8) durch eine Drehbewegung in die Nuten (9) eingreifen.

2. System nach Anspruch 1, wobei die Elemente (8, 9) miteinander zusammenwirken, um Eindrückkräften vorzugsweise größer als 10 daN standzuhalten.

3. System nach Anspruch 2, wobei die Einsteckrippen (8) und die Nuten (9) einen Montage-Winkelhub zwischen 45° und 10°, vorzugsweise zwischen 25° und 15°, aufweisen.

4. System (1) nach einem der Ansprüche 2 und 3, wobei die Einsteckrippen (8) und die Nuten (9) mit im Wesentlichen negativem Spiel, oder vorzugsweise mit einem Spiel im Wesentlichen ungleich null, gleiten.

5. System nach einem der Ansprüche 2 bis 4, wobei die Befestigungsschnittstelle (5) eine Sohle (10) aufweist, die versehen ist mit:
- einem Mittel zum Führen (11) der Einsteckrippen (8) in den Nuten (9) des Trägers (4) in Richtung einer Funktionsendposition;
- einem Mittel zum Verriegeln (12) des Trägers (4) in dieser Position.

6. System nach Anspruch 5, wobei die Sohle (10) eine kreisförmige Öffnung (13) aufweist, die an ihrem Umfang Folgendes trägt:
- wenigstens zwei L-förmige Nuten (9), die in der Position lotrecht zu den Einsteckrippen (8) sind, derart, dass sie die Herausreißbewegung der Einsteckrippen (8) blockieren, wenn sie in den zwei L-förmigen Nuten (9) im Eingriff sind;
- wenigstens eine Einkerbung (12), die mit wenigstens einem Vorsprung (14) zusammenwirkt, der von der Basis des Trägers (4) getragen wird, um die Einsteckrippen (8) in der Position zu halten;
- wenigstens einen Anschlag (15), um die Drehbewegung der Einsteckrippen (8) in der Position anzuhalten, wobei der Anschlag (15) vorzugsweise zwischen zwei aufeinander folgenden Nuten (9) positioniert ist.

7. System nach einem der vorhergehenden Ansprüche, wobei das Funktionselement (2) und der Träger (4) mit Hilfe einer Nut-Steckverbindung aneinander montiert sind.

8. System nach Anspruch 7, wobei der Träger (4) und das Funktionselement (2) Mittel aufweisen, die miteinander zusammenwirken, um Eindrückkräften vorzugsweise größer als 10 daN standzuhalten, wobei die Mittel einerseits wenigstens zwei Einsteckrippen und andererseits Nuten korrespondierender Form sind.

9. System nach Anspruch 8, wobei die Einsteckrippen und die Nuten kreisförmig sind.

10. Außenkarosserie-Teil (3) umfassend ein System zur Befestigung (1) eines Funktionselements (2) nach einem der vorhergehenden Ansprüche.

11. Teil nach Anspruch 10, wobei die Befestigungsschnittstelle (5) durch Schweißen, Kleben, Haften, Einrasten, Schrauben oder Nieten angebracht ist.

12. Teil nach Anspruch 10, wobei die Befestigungsschnittstelle (5) mit dem Außenkarosserie-Teil (3) spritzgegossen ist.

13. Verfahren zum Montieren eines Funktionselements an einem Außenkarosserie-Teil eines Fahrzeugs, mit Hilfe eines Befestigungssystems nach einem der Ansprüche 1 bis 9, bei dem die folgenden Schritte durchgeführt werden:
a. Befestigen der Befestigungsschnittstelle an dem Karosserie-Teil;
b. Festlegen des Funktionselements in dem Träger; und
c. Einstecken und Verriegeln des Trägers in der Befestigungsschnittstelle.

14. Verfahren nach Anspruch 13, bei dem die Befestigungsschnittstelle mit dem Karosserieteil aufgeformt wird.

## Claims

1. System (1) for attaching a functional measurement or detection body (2) to a vehicle bodywork part (3), **characterised in that** it comprises a support (4) comprising a means (6, 7) for attaching to the functional body (2), and an interface (5) for fastening said support (4) to the bodywork part (3), said support (4) and said fastening interface (5) being assembled and fitted to one another using circular grooves, the support (4) and the fastening interface (5) comprise bodies (8, 9) cooperating with each other, said bodies consisting firstly of at least two insertion fins (8) and secondly of grooves (9) of corresponding shape, engagement of the insertion fins (8) in the grooves (9) being carried out by a rotational movement.

2. System according to claim 1, wherein the bodies (8, 9) cooperate with each other to withstand penetration forces preferably greater than 10 daN.

3. System according to claim 2, wherein the insertion fins (8) and the grooves (9) have an angular assembly stroke of between 45° and 10°, preferably between 25° and 15°.

4. System according to one of claims 2 to 3, wherein the insertion fins (8) and the grooves (9) slide with substantially negative clearance, or preferably with substantially zero clearance.

5. System according to one of claims 2 to 4, wherein the fastening interface (5) comprises a sole (10) equipped with:
- a means (11) for guiding the insertion fins (8) in the grooves (9) of the support (4) to a final operating position;
- a means (12) for locking the support (4) in this position.

6. System according to claim 5, wherein the sole (10) comprises a circular hole (13) with on its circumference:
- at least two L-shaped grooves (9) overhanging the insertion fins (8) in the position, so as to prevent the insertion fins (8) from being pulled out when they are engaged in the two L-shaped grooves (9);
- at least one notch (12) cooperating with at least one projection (14) carried by the base of the support (4), to hold the insertion fins (8) in said position;
- at least one stop (15) to stop the rotational movement of the insertion fins (8) in said position, said stop (15) being positioned, preferably, between two successive grooves (9).

7. System according to one of the preceding claims, wherein the functional body (2) and the support (4) are assembled and fitted to one another using grooves.

8. System according to claim 7, wherein the support (4) and the functional body (2) comprise means cooperating with each other to withstand penetration forces preferably greater than 10 daN, said bodies being firstly at least two insertion fins, and secondly grooves of corresponding shape.

9. System according to claim 8, wherein the insertion fins and the grooves are circular.

10. External bodywork part (3) comprising a system (1) for attaching a functional body (2) according to one of the preceding claims.

11. Part according to claim 10, wherein the fastening interface (5) is attached by welding, bonding, gluing, clipping, screwing or riveting.

12. Part according to claim 10, wherein the fastening interface (5) is injection moulded with the external bodywork part (3).

13. Method for assembling a functional body on an external vehicle bodywork part, using an attachment system according to one of claims 1 to 9, wherein the following steps are performed:
a- The fastening interface is attached to the bodywork part;
b- The functional body is immobilised in the support; and
c- The support is inserted and locked in the fastening interface.

14. Method according to claim 13, wherein the fastening interface is overmoulded with the bodywork part.
